(19) Europäisches Patentamt

European Patent Office

Office européen des brevets

(11) **EP 3 502 678 B1**

(12) **EUROPEAN PATENT SPECIFICATION**

(45) Date of publication and mention
of the grant of the patent:
**17.08.2022 Bulletin 2022/33**

(21) Application number: **18215563.0**

(22) Date of filing: **21.12.2018**

(51) International Patent Classification (IPC):
***G01N 27/02*** *(2006.01)*

(52) Cooperative Patent Classification (CPC):
**G01N 27/028**

(54) **HUMIDITY MEASURING SYSTEM AND DEVICE**

FEUCHTIGKEITSMESSSYSTEM UND -VORRICHTUNG

SYSTÈME ET DISPOSITIF DE MESURE D'HUMIDITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2017 IT 201700148071**

(43) Date of publication of application:
**26.06.2019 Bulletin 2019/26**

(73) Proprietor: **Evco S.P.A.**
**32036 Sedico (BL) (IT)**

(72) Inventors:
• **DAL PONT, Pierluigi**
**32036 SEDICO (BL) (IT)**
• **BALDAN, Roberto**
**32036 SEDICO (BL) (IT)**

(74) Representative: **Zamprogno, Bruno et al**
**STUDIO TORTA S.p.A.**
**Via Viotti, 9**
**10121 Torino (IT)**

(56) References cited:
**EP-A2- 0 397 584     US-A- 5 317 274
US-A- 5 396 796**

• **Specialties Measurement: "HTU20P(F) RH/T
Sensor IC - Miniature Relative Humidity and
Temperature Sensor", , 30 September 2014
(2014-09-30), XP055502342, Retrieved from the
Internet:
URL:https://www.cdiweb.com/datasheets/te/H
TU20P.pdf [retrieved on 2018-08-27]**

**Description**

CROSS-REFERENCE TO RELATED APPLICATIONS

This patent application claims priority from Italian patent application no. 102017000148071 filed on 21/12/2017.

TECHNICAL FIELD

The present invention relates to a humidity measuring system and device.

DISCLOSURE OF INVENTION

The object of the present invention is to provide a humidity measuring device that is designed to be electrically connected to two terminals of an electronic humidity measuring apparatus, which are in turn provided to be connected to thermistor temperature sensors too.

A further object of the present invention is to provide a humidity measuring low-consumption device, which requires for its operation a very low current to reduce the voltage drop at the inlet of the electronic measuring apparatus. This voltage drop decrease allows an increase in the voltage range of the humidity measuring signal provided by the humidity measuring device based on the relative humidity at the same measuring inlet of the electronic measuring apparatus.

The object of the present invention is therefore to provide a solution that allows achieving the aforesaid goals.

This object is achieved by the present invention since it relates to a humidity measuring system and device defined according to what is claimed in the appended claims.

BRIEF DESCRIPTION OF THE DRAWINGS

The present invention will now be described with reference to the attached drawings showing an example of non-limiting embodiment, in which:

- Figure 1 is a block diagram of the humidity measuring system made according to the dictates of the present invention;
- Figure 2 is a circuit diagram of a possible embodiment of the humidity measuring device included in the system shown in Figure 1;
- Figure 3 is a block diagram of the humidity measuring system made according to a first variant of the present invention;
- Figure 4 is a circuit diagram of the humidity measuring device included in the system shown in Figure 3;
- Figure 5 is a block diagram of the humidity measuring system which is not part of the present invention;
- Figure 6 is a circuit diagram of the humidity measuring device included in the system shown in Figure 5.

BEST MODE FOR CARRYING OUT THE INVENTION

The present invention will now be described in detail with reference to the attached Figures to allow a person skilled in the art to make and use it. Various modifications to the described embodiments will be immediately apparent to those skilled in the art and the generic principles described may be applied to other embodiments and applications without thereby departing from the scope of the present invention, as defined in the appended claims. Therefore, the present invention should not be considered limited to the embodiments here described and shown, but it must be granted the widest scope of protection in accordance with the principles and characteristics here described and claimed.

The terms used in the continuation of the present description are defined as follows.

The term signal PWM (acronym of Pulse Width Modulation) indicates a rectangular wave pulse signal in which the ratio between the duration of the positive pulse and the duration of the negative pulse is variable. The term DC indicates the Duty Cycle, namely the ratio between the duration of the positive pulse and the duration of the cycle period of the signal PWM. It is clear that the DC can vary from 0 to 1 (0-100%).

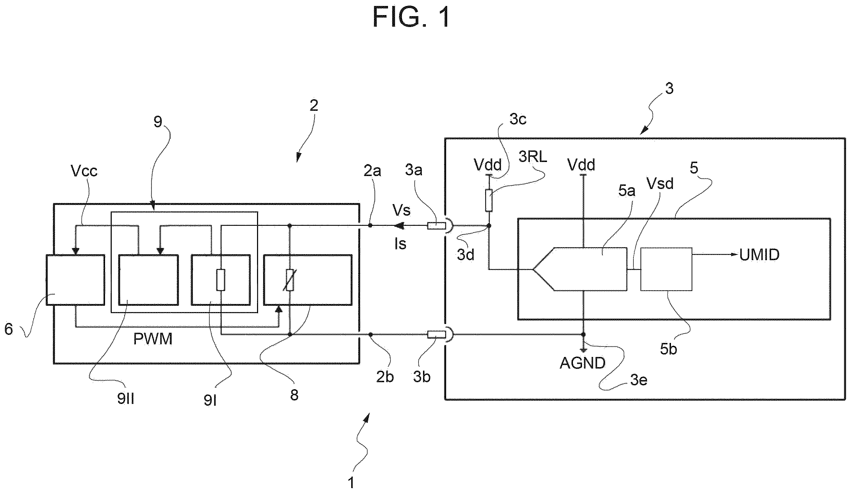

With reference to Figure 1, the number 1 schematically indicates as a whole a humidity measuring system, which comprises a humidity measuring probe or device 2 configured to detect/measure humidity and provide an electrical measuring signal of the detected/measured humidity, and an electronic measuring apparatus 3, which is electrically connected to the humidity measuring device 2 to receive the electrical measuring signal and is designed to process the same so as to provide an indicative value of the measured humidity.

With reference to the embodiment shown in Figure 1, the electronic measuring apparatus 3 is provided with a pair of clamps or terminals 3a and 3b, which are designed to be respectively connected to the terminals 2a and 2b of the humidity measuring device 2 through two electric wires. In the shown example, the electronic measuring apparatus 3 further comprises: a power supply terminal 3c set at a voltage Vdd, a polarization resistor 3RL that has a resistance RL and is connected between the power supply terminal 3c and the terminal 3a through a biasing node 3d, and a processing module 5 having an inlet connected to the biasing node 3d. In use, the terminal 3a is flown through by a current IS and has a voltage VS corresponding to the difference between the supply voltage Vdd and the voltage drop $\Delta V$ at the ends of the bias resistor RL: $\Delta V = Is \cdot RL$. As far as the terminal 3b is concerned, it can be connected to a terminal 3 and set at a reference potential, preferably a ground potential AGND associated with the measuring apparatus 3.

Preferably, the processing module 5 can be configured to determine an indicative value of the measured humidity based on the voltage VS on the biasing node 3d. According to a possible exemplary embodiment shown in Figure 1, the processing module 5 can comprise a microprocessor, which in turn can be provided with a converter stage 5a, preferably an analog-to-digital converter, configured to receive as input the analog voltage signal VS and to convert it into the discrete/digital voltage signal VSd. The microprocessor may also be provided with a calculation stage 5b configured to determine and, preferably, provide an indicative value of the measured humidity based on the voltage signal VS, preferably the discrete voltage signal VSd supplied at the output of the analog-to-digital converter.

With reference to the embodiment shown in Figure 1, the humidity measuring device 2 comprises a conveniently low-consumption humidity sensor 6, which is configured to measure humidity and is designed to provide a signal PWM, whose DC varies based on the measured humidity. Moreover, the humidity measuring device 2 can conveniently comprise a first electronic stage 8, which receives as input the signal PWM and causes a variation of the voltage VS on the terminal 3a and therefore on the biasing node 3d of the electronic measuring apparatus 3 based on the DC of the received signal PWM. The humidity measuring device 2 can further comprise a second electronic stage 9, which is connected to the terminal 2a set at the voltage VS and is designed to supply a conveniently stabilised supply voltage Vcc to the humidity sensor 6.

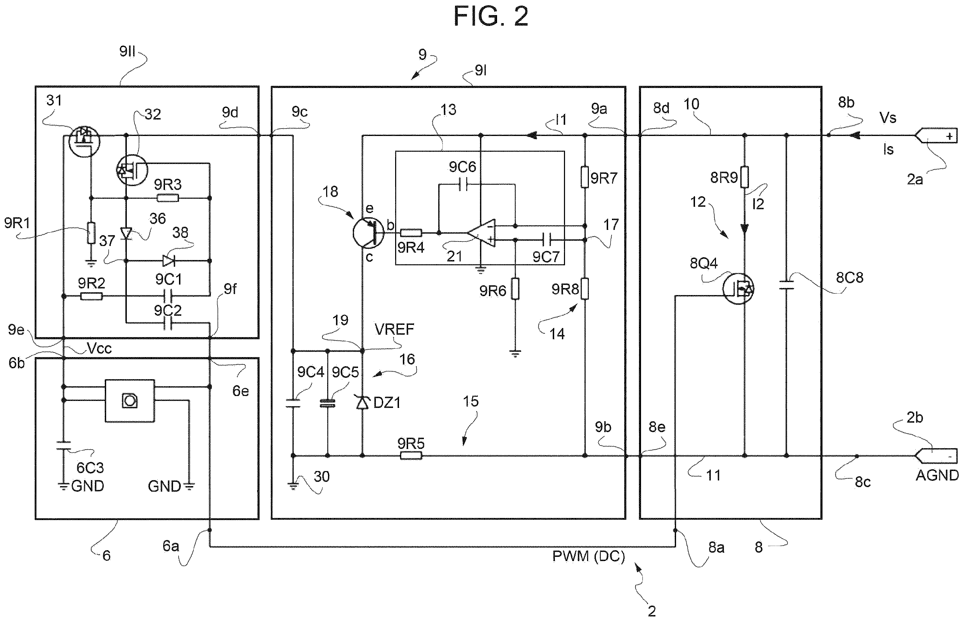

According to a possible exemplary embodiment shown in Figure 2, the humidity sensor 6 can comprise a first terminal set at a reference potential, preferably a ground potential GND associated with the humidity sensor 6, a terminal 6a to supply the signal PWM and a pair of terminals that are connected to each other and to a terminal 6b for receiving the supply voltage Vcc and to a reference terminal set at a reference potential, e.g. a ground potential, through a capacitor 6C3.

With regard to the first electronic stage 8, it may comprise a terminal 8a connected to the terminal 6a of the humidity sensor 6 to receive the signal PWM, a terminal 8b corresponding to the terminal 2a set at the voltage VS and flown through by the current IS, and a terminal 8c corresponding to the terminal 2b set at the reference voltage, preferably the ground voltage AGND. The first electronic stage 8 can further comprise two terminals 8d and 8e respectively connected to two terminals 9a and 9b of the second electronic stage 9.

According to a preferred embodiment shown in Figure 2, the first electronic stage 8 can be designed to vary, based on the signal PWM, the electrical resistance, indicated hereinafter with RS, between the two terminals 8b-8c connected to the terminals 3a-3b of the electronic measuring apparatus 3 to cause a corresponding variation of the voltage VS on the biasing node 3d connected to the processing module 5. According to a preferred exemplary embodiment shown in Figure 2, the first electronic stage 8 can comprise: two electric lines 10 and 11, respectively connected between the terminals 8b-8d and 8c-8e, a resistance variator branch 12, which has the two opposite terminals connected to the two electric lines 10 and 11 and, preferably, a capacitor 8C8 connected in parallel to the resistance variator branch 12. In the shown example, the resistance variator branch 12 is designed to be flown through by a current 12 and can comprise a resistor 8R9 having a resistance R9 and an electronic switch 8Q4 connected in series with each other. The electronic switch 8Q4 can comprise, for example, a transistor, preferably a field-effect transistor (MOSFET), which is arranged in series with the resistor 8R9 and is controlled in its opening/closing by the signal PWM. Preferably, the transistor of the electronic switch 8Q4 can be configured to close and alternately open when the signal PWM is at the high level (positive pulse) and respectively at the low level (negative pulse). Preferably, the gate terminal of the transistor of the electronic switch 8Q4 can be connected to the terminal 8a to receive the signal PWM, and the source and drain terminals thereof can be connected in series with the resistor 8R9 along the resistance variator branch 12.

Please note that if I2s is the instantaneous current passing through the resistor 8R9, then the average current 12 passing through it for each cycle of the signal PWM is

$$I2 = I2s \cdot DC;$$

$$I2 = (VS/R9) \cdot DC.$$

It follows that the "equivalent" resistance RC between the two terminals of the resistance variator branch 12 is as follows

$$RC = VS/I2 = VS/(VS*DC/R9)$$

RC = R9/DC; this latter mathematical relation proves that the first electronic stage 8 operates substantially analogously to a circuit that varies the equivalent resistance RC based on the humidity measured by the sensor 6. In fact, the first electronic stage 8 varies the resistance RC based on the DC of the signal PWM modulated in turn by the humidity sensor 6 according to the measured humidity. The resistance RC then varies starting from a minimum value corresponding to the resistance R9 and is inversely proportional to the DC. The Applicant has found that a convenient value of the resistance R9 could be, for example, about 7.15 KOhm. With regard to the capacitor 8C8, it conveniently provides to remove the instantaneous variations of current IS and voltage VS that are generated by switching the electronic switch 8Q4 in order to obtain a substantially stabilised average value of current IS and voltage VS.

According to a preferred exemplary embodiment shown in Figure 2, the second electronic stage 9 can comprise an electronic supply stage 91 designed to provide a conveniently stabilised reference voltage VREF. The second electronic stage 9 can further, preferably but not necessarily, comprise an electronic surveillance stage 911, which is designed to receive the voltage VREF and to supply the stabilised voltage Vcc to the humidity sensor 6. The electronic surveillance stage 911 is also designed to monitor the operating state of the humidity sensor 6 and can activate/deactivate the power supply voltage Vcc to the sensor according to the condition detected at certain times. Preferably, the humidity sensor 6 may be in a first operating state when it correctly generates the signal PWM, or alternatively in a second operating state, when it does not generate the signal PWM. The electronic surveillance stage 911 can be configured to disable/interrupt the power supply voltage Vcc to the humidity sensor 6 when it detects the second operating state at a preset monitoring time and, vice versa, to supply and/or maintain the power supply voltage Vcc to the humidity sensor 6 when it detects the first operating state at the preset monitoring time. According to a preferred exemplary embodiment shown in Figure 2, besides the two terminals 9a and 9b, the electronic supply stage 91 can comprise a terminal 9c connected to a terminal 9d of the electronic surveillance stage 911 to provide the same voltage reference VREF. According to a preferred exemplary embodiment shown in Figure 2, the electronic supply stage 91 can comprise an operational circuit 13, a first resistive circuit 14, a second resistive circuit 15, a stabiliser stage 16 and an amplifier device 18. The first resistive circuit 14 has two opposite terminals respectively connected to the terminals 9a and 9b and can comprise a resistive divider consisting of two resistors 9R7 and 9R8 having resistors R7 and respectively R8 connected in series with each other through an intermediate node 17. The second resistive circuit 15 may comprise a resistor 9R5 having a resistance R5, which has a terminal connected to the terminal 9b and the other terminal connected to a reference terminal 30 set at a preset reference potential, preferably a ground potential GND of the sensor 6.

The operational circuit 13 can comprise an operational amplifier 21 having an inverting inlet connected to the intermediate node 17 of the first resistive circuit 14 and to the outlet of the operational amplifier 21 through a capacitor 9C6. The operational amplifier 21 can further comprise a non-inverting inlet, which is connected both to the intermediate node 17 through a capacitor 9C7 and to a reference terminal set at a reference potential, for example a ground potential, preferably through a resistor 9R6 having a resistance R6. The outlet of the operational amplifier 21 can be connected to a control terminal of the amplifier device 18 through a resistor 9R4 having a resistance R4. The amplifier device 18 may comprise, for example, a bipolar junction transistor preferably of the PNP type, which has the base terminal corresponding to the control terminal connected to the outlet of the operational amplifier 21 through the resistor 9R4, the emitter terminal connected to the terminal 9a and the collector terminal connected to the terminal 9c through a common node 19 having the reference voltage VREF. As far as the stabiliser stage 16 is concerned, it can comprise a Zener diode DZ1, whose cathode is connected to the common node 19 and whose anode is connected to the reference terminal 30. The stabiliser stage 16 can further comprise two capacitors 9C4 and 9C5 connected in parallel to the Zener diode DZ1. According to a preferred exemplary embodiment shown in Figure 2, besides the terminal 9d, the electronic surveillance stage 911 can comprise a supply terminal 9e connected to the terminal 6b of the humidity sensor 6 to supply the power supply voltage Vcc, and a detection terminal 9f connected to the terminal 6e of the humidity sensor 6 to receive the signal PWM. The electronic surveillance stage 911 may further comprise an amplifier device 31, preferably a field-effect transistor, which has the source and drain terminals respectively connected to the terminals 9d and 9e and the gate terminal connected to a ground terminal through a resistor 9R1 with resistance R1. The electronic surveillance stage 911 may further comprise an amplifier device 32, preferably a field-effect transistor, which has the source terminal connected to the terminal 9d, the drain terminal connected to the gate terminal of the amplifier device 31 and the gate terminal connected to terminal 9e through a capacitor 9C1 and a resistor 9R2 connected in series with each other. The electronic surveillance stage 911 may further comprise a resistor 9R3 connected between the gate and the drain terminals of the amplifier device 32 and to the gate terminal of the amplifier device 31, a diode 36 and a capacitor 9C2 connected in series with each other through an intermediate node 37 between the source terminal of the amplifier device 32 and the terminal 6e, and a diode 38 connected between the intermediate node 37 and the gate terminal of the amplifier device 32.

The operation of the humidity measuring system 1 will be described below.

In use, the humidity sensor 6 provides the signal PWM to the first electronic stage 8 and adjusts/varies the DC of the signal PWM based on the measured humidity. The variation of DC of the signal PWM causes a corresponding variation of the resistance RC in the first electronic stage 8, which in turn determines a preset variation of the voltage VS in the electronic measuring apparatus 3. The humidity sensor 6 can be configured to vary the DC of the signal PWM between a value of about zero and a value of about one. The variation of the DC by means of the sensor 6 can preferably be directly proportional to the humidity. The sensor 6 can further be calibrated so that the variation of the DC is contained within a preset measuring range delimited by a minimum and by a maximum value, respectively associated with a preset minimum and maximum humidity. In use, when the humidity corresponds to the minimum value, the humidity sensor 6 provides the signal PWM with the minimum DC (e.g. approximately equal to zero). In this condition, the transistor device 8Q4 is interdicted (open), and the resistance RC on the resistance variator branch 12 is infinite. Therefore, in this condition the total equivalent resistance RS between the terminal 3a and the reference terminal 3b of the electronic measuring device 3 corresponds to the resistance RF in the second electronic stage 9. It occurs in fact that

$$RS = RF = ((VS/I1)*(R7 + R8))/((VS/I1)+(R7 + R8))$$

$$VS = Vdd-RL*(Vdd/(RL+RS))$$

Vice versa, in the opposite condition, namely when the measured humidity corresponds to the preset maximum humidity value, the humidity sensor 6 provides a signal PWM with a DC approximately equal to one. In this state, the transistor device 8Q4 is active (closed), the resistance on the resistance variator branch 12 is R9 and the total equivalent resistance RS between the terminals 3a and 3b of the electronic device 3 corresponds to

$$VS = Vdd-RL*(Vdd/(RL+((R9 + RF)/(R9*RF))))$$

$$RS = R9*RF/RF+R9$$

On the other hand, when the humidity varies within the preset range, the humidity sensor 6 varies the DC of the signal PWM and the value of the total equivalent resistance RS between the terminal 3a and the reference terminal 3b of the electronic measurement device 3 varies according to the signal PWM DC based on the following relation:

$$RS = (R9/DC)*RF/((R9/DC)+RF)$$

The variation of the resistance RS determines a variation of the current IS, a variation of the voltage drop on the load resistance RL and therefore a variation of the voltage VS that depends on the DC and therefore on the humidity. It is clear that if the converter stage 5a is provided with an analog-to-digital converter having, for example, a conversion resolution equal to $2^n$ (discrete conversion levels), the discrete voltage signal VS supplied by the converter to the calculation stage 5b can correspond to:

$$VSd = 2^n * RS/(RS+RL)$$

$$VSd = 2^n* [(R9/DC)*RF/(R9/DC)+RF]/[[(R9/DC)*RF/(R9/DC)+RF]+$$

$$RL]]$$

It follows that the voltage VS supplied at the inlet to the calculation stage 5b depends directly on the measured humidity. In fact, the resistance RS is regulated by the first electronic stage 8 in response to the variation of the DC of the signal PWM, which is in turn activated by the humidity sensor 6 based on the measured humidity.

The Applicant has found that it is convenient to set a voltage Vdd of such a value that it limits in use the variation of the voltage VS within a preset voltage range associated with a corresponding preset humidity range. The Applicant has also found that a minimum value of the voltage VS, obtained in response of a maximum DC, could conveniently be about 2.4 V.

The calculation stage 5b can then process the discrete voltage $VSd = 2^n*(RS/(RS+RL))$ and determine the humidity value detected by the humidity measuring apparatus 2 based on said voltage. It is clear that the calculation stage 5b may comprise a processing unit configured to determine the humidity value based on the voltage VSd by means of at least one calculation table, a calculation function and/or by implementing a calculation algorithm. The calculation algorithm can be parameterized, for example, according to the values of the electronic components present in the humidity measuring device 2 and/or based on its electrical characteristics. For example, a calculation function could be parameterized/preset/calibrated to ensure that each voltage value VS uniquely corresponds to a humidity value and this relation can be determined in a test/calibration phase of the electronic measuring apparatus 3 and/or of the humidity measuring device 2.

With regard to the operation of the electronic supply stage 91 of the second electronic stage 9, it operates as a current regulator circuit based on the voltage VS and is designed to generate the stabilised voltage VREF necessary to supply the power supply voltage Vcc to the sensor 6. It should be noted that the regulation of the current I1 by means of the electronic supply stage 91 is carried out substantially independently of the signal PWM of the humidity sensor 6. Therefore, the electronic supply stage 91 behaves like a resistor whose value is substantially fixed, namely equal to RF = VS/I1, wherein I1 is substantially the current controlled by the amplifier device 18.

In use, the electronic supply stage 91 is configured to reach a balance condition in which the inverting and non-inverting inlets of the operational amplifier 21 are at the same potential. Since, on the one hand, the electrical potential on the inverting inlet of the operational amplifier 21 with respect to the potential of the terminal 8c approximately corresponds to the voltage at the ends of the resistor 9R8 and, on the other hand, the electrical potential in the non-inverting inlet of the operational amplifier 21 with respect to the terminal 8c approximately corresponds to the voltage on the resistor 9R5, the balance condition occurs when the voltage on the resistor 9R8 is approximately equal to the voltage on the resistor 9R5. The operational circuit 13 then regulates the current I1 through the amplifier device 18 to ensure that the voltage drop on the resistor 9R5 is approximately equal to the voltage drop on the resistor 9R8. In use, a lowering of the voltage VS causes a decrease of the voltage on the resistor 9R8, and a decrease of the voltage on the inverting inlet of the operational amplifier 21. In this case, the operational amplifier 21 increases the output voltage and controls through the device amplifier 18 a decrease of the current I1. The current I1 is reduced until reaching a value such that the voltage drop on the resistor 9R5 approximately corresponds to the voltage at the ends of the resistor 9R8. It is clear that the resistor 9R6, if present, conveniently compensates for the input voltage imbalance of the operational amplifier 21 due to the bias current, while the capacitors 9C6 and 9C7, if present, form a frequency stabilising network. As far as the Zener DZ1 diode is concerned, it is designed to stabilise on the node 19 the voltage VREF necessary for supplying the stabilised voltage Vcc to the humidity sensor 6. The capacitors 9C4 and 9C5, if present, act as a bypass and an energy reserve for the absorption peaks of the humidity sensor 6.

Vice versa, in the event of an increase in the voltage VS, there is a current increase in the resistor 9R5 that is proportional to the voltage increase so that the voltage on the resistor 9R5 approximately reaches the new voltage value on the resistor 9R8. It is clear that the electronic supply stage 91 is preferably configured to ensure that in the minimum VS condition, the preset value of the current I1 is higher than the sum of the average value of the current absorbed by the humidity sensor 6 and of the current necessary for the operation of the electronic supply stage 91. Conveniently, the current I1 can be determined based on the ratio between the resistances R7 and R8 and the resistance R5.

With regard to the electronic surveillance stage 911, besides receiving the voltage VREF on the node 19 and supplying the voltage Vcc to the humidity sensor 6, it operates substantially as a "Watch Dog" circuit, as it monitors the activity of the humidity sensor 6 based on the presence/absence of the signal PWM. If the electronic surveillance stage 911 detects the absence of the signal PWM, it interrupts the power supply to the humidity sensor 6. Preferably, the electronic surveillance stage 9II can carry out the monitoring according to a cyclic mode, i.e. at preset intervals, for example until it detects again the presence of the signal PMW once the power supply has been restored. The amplifier device 31 operates as an electronic switch based on the supply voltage Vcc of the humidity sensor 6. The amplifier device 32 operates in an almost linear zone and together with the amplifier device 31 and the network formed by the resistor 9R2 and by the capacitor 9C1 forms an oscillator circuit, which is designed to periodically interrupt the power supply of the voltage Vcc to the humidity sensor 6. The signal PWM is taken by means of the capacitor 9C2 and, together with the diodes 36 and 38, inhibits the operation of the oscillator circuit. The amplifier device 31 is designed to operate in saturation or in interdiction by supplying or not the voltage Vcc to the humidity sensor 6. The amplifier device 32, due to the negative reaction introduced by the resistor 9R3, operates in an unstable state and works as an amplifier, whereas the resistor 9R1 constitutes the output load of the amplifier. The network formed by the resistor 9R2 and by the capacitor 9C1 introduces a positive reaction between the drain terminal of the amplifier device 31 and the gate terminal of the amplifier device 32 and helps define the oscillation frequency of the circuit. Through the capacitor 9C2, the signal PWM at the outlet of the humidity sensor 6 reaches the node 37 between the diodes 36 and 38. In the absence of the signal PWM, the diodes 36 and 38 do not affect the operation of the circuit, which oscillates with a preset period, preferably a few seconds. In this condition, the amplifier device 31 cyclically interrupts the voltage Vcc to the humidity sensor 6.

If, on the other hand, the humidity sensor 6 operates correctly and the signal PWM is present, the diodes 36 and 38 polarize the gate terminal of the amplifier device 32 so that it goes into interdiction. In this way, the amplifier device 31, due to the presence of the resistor 9R1, goes into saturation and continuously supplies the voltage VREF to the humidity sensor 6.

The advantages of the humidity measuring system described above are as follows. Under the expected operating conditions, the humidity sensor device behaves like a variable resistance that is inversely proportional to the relative humidity variation. Its behaviour is similar to the thermistors with a negative temperature coefficient. Therefore, the operation does not require any or requires little changes to the electrical circuit of the measuring instrument with an inlet for thermistors. The measurement of the output signal from the humidity measuring device can be carried out ratiometrically and therefore the value is theoretically independent of the absolute value of the voltage Vdd within the expected voltage range.

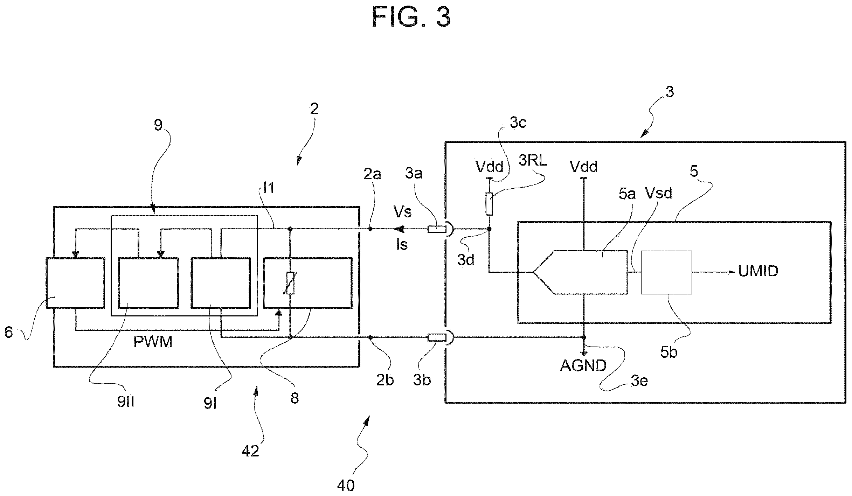

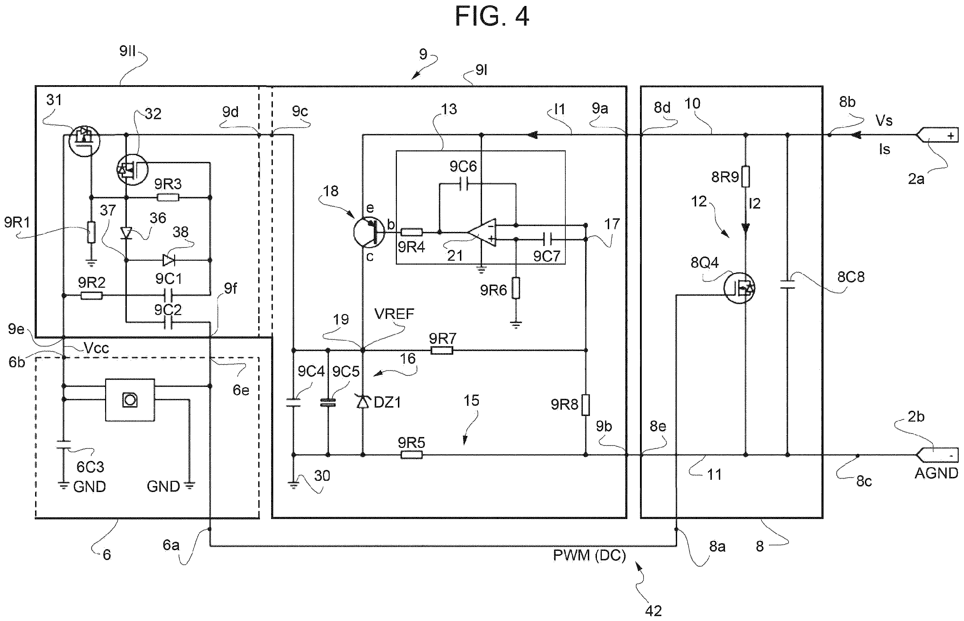

The embodiment schematically shown in Figures 3 and 4 relates to a humidity measuring system 40, which is similar to the humidity measuring system 1, and whose components will be indicated, where possible, with the same reference numbers indicating corresponding parts of the humidity measuring system 1.

The humidity measuring system 40 differs from the humidity measuring system 1 because in the humidity measuring device 42 shown in Figure 4 the resistor 9R7 of the electronic supply stage 91 is connected between the node 17 and the node 19, instead of being connected between the node 17 and the terminal 9a. The different connection of the resistor 9R7 causes the electronic supply stage 91 to operate as a current regulator circuit, in which, however, the current regulation is carried out independently of the voltage variation Vs. The balance condition of the operational circuit 13 occurs in fact when:

$$\frac{VREF}{(R7 + R8)} * R8 = I1 * R5$$

so that

$$I1 = \frac{VREF * R8}{(R7 + R8) * R5}$$

Therefore, it is clear that the current I1 is independent of the voltage VS. Also in this configuration, the operational circuit 13 reaches the balance condition when the inverting and non-inverting inlets are approximately at the same potential. This condition is reached when the voltage drop on the resistor 9R5 is approximately equal to the voltage drop on the resistor 9R8. It should be noted that the voltage on the resistor 9R8 remains approximately constant since it substantially depends, on the one hand, on the ratio between the resistors 9R7 and 9R8 of the divider and, on the other hand, on the reference voltage VREF, which is however kept at a stable value thanks to the Zener diode DZ1.

The humidity measuring device 42 operates so as to vary the discrete voltage VS based on the DC, and therefore on the measured humidity, as indicated by the following relation:

$$VSd = = 2^n * (R9/DC) * (Vdd - RL*I1) / (Vdd * (RL + (R9/DC)))$$

The humidity measuring system 40 is particularly advantageous since it reduces the need to implement variations on the electrical circuit of the measuring instrument with an inlet for thermistors.

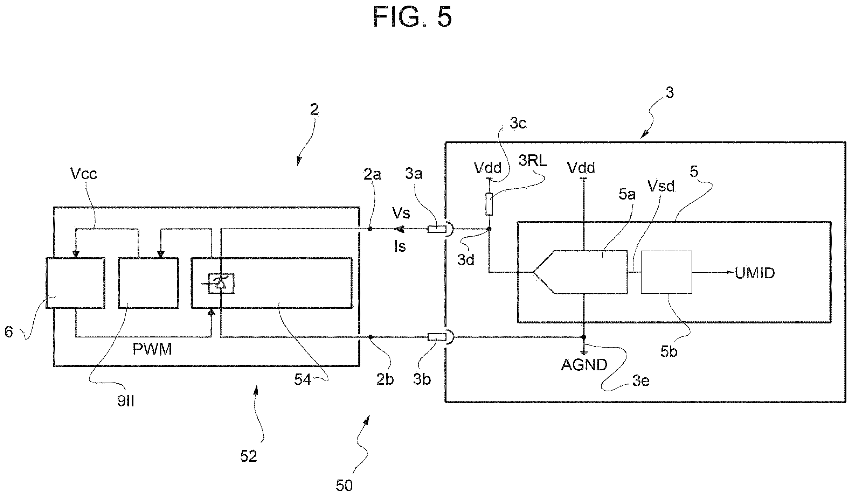

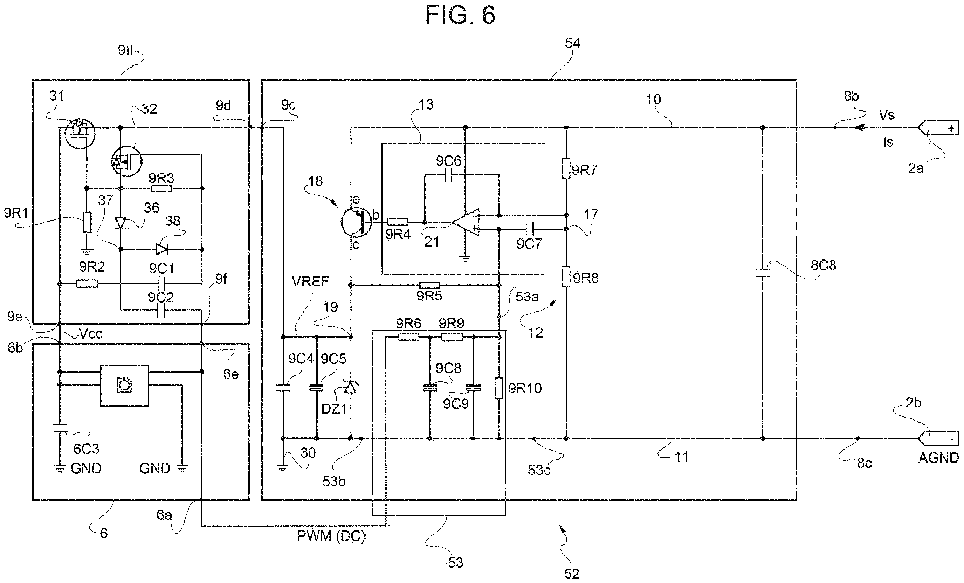

Figures 5 and 6 relates to a humidity measuring system 50, which is similar to the humidity measuring system 1, and whose components will be indicated, where possible, with the same reference numbers indicating corresponding parts of the humidity measuring system 1.

The humidity measuring system 50 differs from the humidity measuring system 1 because the first electronic stage 8 and the electronic supply stage 91 of the humidity measuring device 2 are replaced in the humidity measuring device 52 by a voltage regulator stage 54, which regulates the voltage VS based on the average voltage of the signal PWM. With reference to Figure 6, the voltage regulator stage 54 can comprise an electronic voltage regulator circuit, which varies the voltage VS based on the average voltage value of the signal PWM, and at the same time provides a stabilised voltage VREF for supplying voltage Vcc to the humidity sensor 6.

According to Figure 6, the voltage regulator stage 54 comprises: the operational circuit 13, the amplifier device 18, the stabiliser stage 16 and the first resistive circuit 12, mutually connected as in the electronic supply stage 91, and the capacitor 9C8 present in the first electronic stage 8. The voltage regulator stage 54 has a terminal electrically connected to the terminal 6a of the humidity sensor 6 and comprises an electronic filter circuit 53, which receives the signal PWM through the terminal and is provided with a terminal 53a connected to the non-inverting inlet of the operational amplifier 21 and to the terminal 19 through the resistor 9R5.

The electronic filter circuit 53 is configured to supply a voltage having an average value proportional to the signal PWM to the non-inverting inlet of the operational amplifier 21. The electronic filter circuit 53 further comprises a terminal 53b connected to the anode terminal of the Zener diode DZ1, and a terminal 53c connected to the terminal 8c. The electronic filter circuit 53 further comprises two resistors 9R6 and 9R9, connected in series between the terminals 53a and 53b through an intermediate node and having resistances R6 and respectively R9, a capacitor 9C8 having a capacity C8 connected between said intermediate node and the terminals 53b and 53c, a capacitor 9C9 having a capacity C9 connected between the terminals 53a and 53c, and a resistor 9R10 having a resistance R10 connected in parallel to the capacitor 9C9. The circuit branch composed by the resistors 9R6 and 9R9 and by the capacitors 9C8 and 9C9 forms a low-pass filter designed to provide a voltage to the non-inverting inlet of the operational amplifier 21 having an average value proportional to the signal PWM. During operation, the operational amplifier 21 controls the amplifier device 18 to set at the terminals 2a and 2b a voltage that is directly proportional to the DC value and reaches a balance condition in which the voltage at the ends of the resistor 9R8, through the resistor 9R7, is approximately equal to the voltage at the non-inverting inlet. The resistors R5 and R10 of the resistors 9R5 and 9R10 can be set based on the variation field of the voltage VS, as well as on the minimum value thereof. In detail, DZ1 stabilises the voltage VREF necessary for the operation of the humidity sensor 6.

In use, if the humidity increases, the DC increases, the average value of the voltage at terminal 53a increases and the voltage at the non-inverting inlet of operational amplifier 21 increases. In this case the output voltage of the operational amplifier 21 increases, the base current of the amplifier device 18 decreases, the current IS decreases and the voltage VS increases as the drop on the resistance RL decreases. The voltage on the inverting inlet of the operational amplifier IC2 increases accordingly to take the value approximately equal to the voltage on the non-inverting inlet. It is clear that the operation is reversed when the humidity decreases.

The voltage VS is determined by the DC value of the signal PWM, the ratio between the values of R5, (R6 + R9), R10 and the ratio between R7 and R8. In particular, R5 determines the value of VS for DC equal to zero.

When the voltage VS is supplied to the converter stage 5a having a reference voltage corresponding to the supply voltage Vdd applied to the humidity sensor 6 by means of RL, then the discrete value VSd is as follows

$$VSd = 2^n * (VS/Vdd)$$

Under the expected operating conditions, the humidity measuring device acts as a derivative voltage regulator whose value is proportional to the measured relative humidity value. For its operation, it does not require any or requires little variations to the electrical circuit of the measuring instrument with an inlet for thermistors. The measurement of the output signal from the humidity measuring device can be carried out in a voltmeter mode and with the measured value that is independent of the value of the inlet bias resistances within the expected range of values.

**Claims**

1. A humidity measuring device (2)(42) connectable to an electronic measuring apparatus (3) that is provided with:

   at least a first terminal (3a) and a processing module (5),
   which is configured to determine the humidity based on the measurement voltage (VS) on said terminal (3a),
   the humidity measuring device (2)(42) comprises:

   a humidity sensor (6) that is configured to provide an electrical pulse signal (PWM) and to modulate the duty cycle (DC) of said electrical pulse signal (PWM) based on the detected/measured humidity; and
   a first electronic stage (8), which is electrically connected to said humidity sensor (6) for receiving said electrical pulse signal (PWM) and is configured to vary the measurement voltage (VS) on said first terminal (3a) of said measuring apparatus (3) based on the duty cycle (DC) of said electrical pulse signal (PWM),

   said first electronic stage (8) comprises:

   a resistor (8R9),
   and an electronic switch device (8Q4) that is connected to said resistor (8R9),
   wherein said humidity sensor (6) controls the electronic switch device (8Q4) by means of the electrical pulse signal (PWM) to vary the equivalent resistance (RS) between said first terminal (3a) and a second terminal (3b) based on the detected/measured humidity;

wherein said processing module (5) is configured to detect a measurement voltage variation (VS) based on the variation of said equivalent resistance (RS).

2. The humidity measuring device (2)(42) according to claim 1, comprising a second electronic stage (9) provided with a supply stage (91), which is connected to said first terminal (3a) for receiving a first current (IS) associated with said first voltage (VS) and in turn is provided with:

   a reference node (19) set at a reference voltage (VREF),
   an amplifier device (18), which is connected between said first terminal (3a) and said reference node (19) and is configured to control said first current (IS) based on a control signal,
   a first resistive circuit (14) provided with two resistors (9R7) and (9R8) connected in series between said first terminal (3a) and a second terminal (3b);
   a second resistive circuit (15) provided with a resistor (9R5) connected between said second terminal (3b) and a node set at ground potential;
   an operational circuit (13), which is connected to said first resistive circuit (14) and to the second resistive circuit (15) and is configured to provide the control signal to the amplifier device (18), thus regulating said first current (IS) based on the voltage drop on a resistor (9R8) of said first resistive circuit (14) and on the voltage drop on the resistor (9R5) of the second resistive circuit (15).

3. The humidity measuring device (2)(42) according to claim 2, wherein said operational circuit (13) comprise an operational amplifier (21) having an inverting inlet connected to an intermediate node (17) of the first resistive circuit (14) and to the outlet of the operational amplifier (21) through a capacitor (9C6).

4. The humidity measuring device (2)(42) according to claim 3, wherein said operational amplifier (21) comprises a non-inverting inlet, which is connected both to the intermediate node (17) through a capacitor (9C7) and to a reference terminal set at a reference potential.

5. The humidity measuring device (2)(42) according to claim 4, wherein said supply stage (91) is configured to reach a balance condition in which the inverting and non-inverting inlets of the operational amplifier (21) are at the same potential.

6. The humidity measuring device (2)(42) according to claim 5, wherein an outlet of the operational amplifier (21) is connected to a control terminal of said amplifier device (18) through a resistor (9R4).

7. The humidity measuring device (2)(42) according to any of claims from 2 to 6, wherein second electronic stage (9) comprises an electronic surveillance stage (911), which is connected to said reference node (19) and to said humidity sensor (6) for providing it with a stabilised supply voltage (Vcc) based on said reference voltage (VREF); said electronic surveillance stage (911) being configured to interrupt the supply of a stabilised supply voltage (Vcc) to the humidity sensor (6) based on said electrical pulse signal (PWM).

8. The humidity measuring device (2)(42) according to claim 7 wherein said electronic surveillance stage (9II), monitors the activity of the humidity sensor (6) based on the presence/absence of said electrical pulse signal (PWM).

9. The humidity measuring device (2)(42) according to claim 8, wherein said electronic surveillance stage (9II) comprise a supply terminal (9e) connected to a terminal (6b) of the humidity sensor (6) to supply the stabilised supply voltage (Vcc), and a detection terminal (9f) connected to a terminal (6e) of the humidity sensor (6) to receive said electrical pulse signal (PWM).

10. The humidity measuring device (2)(42) according to claim 9, wherein said electronic surveillance stage (9II) comprises an amplifier device (31), which has the source and drain terminals respectively connected to a first terminal 9d and a second terminal 9e and the gate terminal connected to a ground terminal through a resistor (9R1).

11. The humidity measuring device (2)(42) according to any of the previous claims, wherein when the humidity varies within the preset range, said humidity sensor (6) varies the duty cycle of said electrical pulse signal (PWM) and the value of the total equivalent resistance (RS) between the first terminal (3a) and second terminal (3b) of the electronic measurement device 3 according to the s electrical pulse signal based on the following relation:

$$RS = (R9/DC) * RF / ((R9/DC) + RF)$$

wherein DC is the duty cycle of the electrical pulse signal (PWM).

12. A humidity measuring system (1)(40) comprising:

an electronic measuring apparatus (3) that is provided with: at least a first terminal (3a), and a processing module (5), which is configured to determine the humidity based on the measurement voltage (VS) on said terminal (3a), and
a humidity measuring device (2)(42) made according to any of the previous claims:
said processing module (5) is configured to detect a variation of the measurement voltage (VS) based on the variation of said equivalent resistance (RS).

**Patentansprüche**

1. Feuchtigkeitsmessvorrichtung (2) (42), die an ein elektronisches Messgerät (3) angeschlossen werden kann, das versehen ist mit: mindestens einem ersten Anschluss (3a) und einem Verarbeitungsmodul (5), das so eingerichtet ist, dass es die Feuchtigkeit auf der Grundlage der Messspannung (VS) an dem Anschluss (3a) bestimmt, wobei die Feuchtigkeitsmessvorrichtung (2) (42) umfasst:

einen Feuchtigkeitssensor (6), der so eingerichtet ist, dass er ein elektrisches Impulssignal (PWM) bereitstellt und das Tastverhältnis (DC) des elektrischen Impulssignals (PWM) auf der Grundlage der detektierten/gemessenen Feuchtigkeit moduliert; und
eine erste elektronische Stufe (8), die elektrisch mit dem Feuchtigkeitssensor (6) verbunden ist, um das elektrische Impulssignal (PWM) zu empfangen, und so eingerichtet ist, dass sie die Messspannung (VS) an dem ersten Anschluss (3a) der Messvorrichtung (3) auf der Grundlage des Tastverhältnisses (DC) des elektrischen Impulssignals (PWM) variiert,
wobei die erste elektronische Stufe (8) umfasst:

einen Widerstand (8R9) und
eine elektronische Schaltvorrichtung (8Q4), die mit dem Widerstand (8R9) verbunden ist, wobei der Feuchtigkeitssensor (6) die elektronische Schaltvorrichtung (8Q4) mittels des elektrischen Impulssignals (PWM) steuert, um den Ersatzwiderstand (RS) zwischen dem ersten Anschluss (3a) und einem zweiten Anschluss (3b) auf der Grundlage der detektierten/gemessenen Feuchtigkeit zu variieren;
wobei das Verarbeitungsmodul (5) so eingerichtet ist, dass es eine Variation der Messspannung (VS) auf der Grundlage der Variation des Ersatzwiderstands (RS) detektiert.

2. Feuchtigkeitsmessvorrichtung (2) (42) nach Anspruch 1, umfassend eine zweite elektronische Stufe (9), die mit einer Versorgungsstufe (9I) versehen ist, die mit dem ersten Anschluss (3a) verbunden ist, um einen ersten Strom (IS) zu empfangen, der mit der ersten Spannung (VS) verknüpft ist, und ihrerseits versehen ist mit:

einem Referenzknoten (19), der auf eine Referenzspannung (VREF) eingestellt ist,
einer Verstärkervorrichtung (18), die zwischen dem ersten Anschluss (3a) und dem Referenzknoten (19) verbunden ist und so eingerichtet ist, dass sie den ersten Strom (IS) auf der Grundlage eines Steuersignals steuert,
einer ersten Widerstandsschaltung (14), die mit zwei Widerständen (9R7) und (9R8) versehen ist, die zwischen dem ersten Anschluss (3a) und einem zweiten Anschluss (3b) in Reihe geschaltet sind;
einer zweiten Widerstandsschaltung (15), die mit einem Widerstand (9R5) versehen ist, der zwischen dem zweiten Anschluss (3b) und einem auf Erdungspotenzial eingestellten Knoten verbunden ist;
einer Betriebsschaltung (13), die mit der ersten Widerstandsschaltung (14) und der zweiten Widerstandsschaltung (15) verbunden ist und so eingerichtet ist, dass sie das Steuersignal an die Verstärkervorrichtung (18) übermittelt, wodurch der erste Strom (IS) auf der Grundlage des Spannungsabfalls an einem Widerstand (9R8) der ersten Widerstandsschaltung (14) und
des Spannungsabfalls an dem Widerstand (9R5) der zweiten Widerstandsschaltung (15) geregelt wird.

3. Feuchtigkeitsmessvorrichtung (2) (42) nach Anspruch 2, wobei die Betriebsschaltung (13) einen Operationsverstärker (21) umfasst, der einen invertierenden Eingang aufweist, der mit einem Zwischenknoten (17) der ersten Widerstandsschaltung (14) und mit dem Ausgang des Operationsverstärkers (21) über einen Kondensator (9C6) verbunden ist.

4.  Feuchtigkeitsmessvorrichtung (2) (42) nach Anspruch 3, wobei der Operationsverstärker (21) einen nicht-invertierenden Eingang umfasst, der sowohl mit dem Zwischenknoten (17) über einen Kondensator (9C7) als auch mit einem auf ein Bezugspotenzial eingestellten Referenzanschluss verbunden ist.

5.  Feuchtigkeitsmessvorrichtung (2) (42) nach Anspruch 4, wobei die Versorgungsstufe (9I) so eingerichtet ist, dass sie einen Gleichgewichtszustand erreicht, in dem der invertierende und der nicht-invertierende Eingang des Operationsverstärkers (21) auf dem gleichen Potenzial liegen.

6.  Feuchtigkeitsmessvorrichtung (2) (42) nach Anspruch 5, wobei ein Ausgang des Operationsverstärkers (21) über einen Widerstand (9R4) mit einem Steueranschluss der Verstärkervorrichtung (18) verbunden ist.

7.  Feuchtigkeitsmessvorrichtung (2) (42) nach einem der Ansprüche 2 bis 6, wobei die zweite elektronische Stufe (9) eine elektronische Überwachungsstufe (9II) umfasst, die mit dem Referenzknoten (19) und dem Feuchtigkeitssensor (6) verbunden ist, um ihn mit einer stabilisierten Versorgungsspannung (Vcc) auf der Grundlage der Referenzspannung (VREF) zu versorgen;
    wobei die elektronische Überwachungsstufe (9II) so eingerichtet ist, dass sie die Versorgung des Feuchtigkeitssensors (6) mit einer stabilisierten Versorgungsspannung (Vcc) auf der Grundlage des elektrischen Impulssignals (PWM) unterbricht.

8.  Feuchtigkeitsmessvorrichtung (2) (42) nach Anspruch 7, wobei die elektronische Überwachungsstufe (9II) die Aktivität des Feuchtigkeitssensors (6) auf der Grundlage des Vorhandenseins/Fehlens des elektrischen Impulssignals (PWM) überwacht.

9.  Feuchtigkeitsmessvorrichtung (2) (42) nach Anspruch 8, wobei die elektronische Überwachungsstufe (9II) einen Versorgungsanschluss (9e) umfasst, der mit einem Anschluss (6b) des Feuchtigkeitssensors (6) verbunden ist, um die stabilisierte Versorgungsspannung (Vcc) bereitzustellen, und einen Detektionsanschluss (9f) umfasst, der mit einem Anschluss (6e) des Feuchtigkeitssensors (6) verbunden ist, um das elektrische Impulssignal (PWM) zu empfangen.

10. Feuchtigkeitsmessvorrichtung (2) (42) nach Anspruch 9, wobei die elektronische Überwachungsstufe (9II) eine Verstärkervorrichtung (31) umfasst, deren Source-Anschluss und Drain-Anschluss mit einem ersten Anschluss 9d bzw. einem zweiten Anschluss 9e verbunden sind und deren Gate-Anschluss über einen Widerstand (9R1) mit einem Erdungsanschluss verbunden ist.

11. Feuchtigkeitsmessvorrichtung (2) (42) nach einem der vorangehenden Ansprüche, wobei, wenn die Feuchtigkeit innerhalb des voreingestellten Bereichs variiert, der Feuchtigkeitssensor (6) das Tastverhältnis des elektrischen Impulssignals (PWM) und den Wert des Gesamtersatzwiderstands (RS) zwischen dem ersten Anschluss (3a) und dem zweiten Anschluss (3b) der elektronischen Messvorrichtung 3 gemäß dem elektrischen Impulssignal auf der Grundlage der folgenden Beziehung variiert:

$$RS = (R9/DC)*RF/((R9/DC)+RF)$$

wobei
DC das Tastverhältnis des elektrischen Impulssignals (PWM) ist.

12. Feuchtigkeitsmesssystem (1) (40), umfassend:
    ein elektronisches Messgerät (3), das versehen ist:

    mindestens einem ersten Anschluss (3a) und einem Verarbeitungsmodul (5), das so eingerichtet ist, dass es die Feuchtigkeit auf der Grundlage der Messspannung (VS) an dem Anschluss (3a) bestimmt, und
    eine Feuchtigkeitsmessvorrichtung (2) (42), die nach einem der vorangehenden Ansprüche hergestellt ist,
    wobei das Verarbeitungsmodul (5) so eingerichtet ist, dass es eine Variation der Messspannung (VS) auf der Grundlage der Variation des Ersatzwiderstands (RS) detektiert.

**Revendications**

1. Dispositif de mesure d'humidité (2) (42) apte à être connecté à un appareil de mesure électronique (3) qui est muni : d'au moins une première borne (3a) et d'un module de traitement (5), qui est configuré pour déterminer l'humidité sur la base de la tension de mesure (VS) sur ladite borne (3a), le dispositif de mesure d'humidité (2) (42) comprend :

   un capteur d'humidité (6) qui est configuré pour fournir un signal d'impulsion électrique (PWM) et pour moduler le rapport cyclique (DC) dudit signal d'impulsion électrique (PWM) sur la base de l'humidité détectée/mesurée ; et un premier étage électronique (8), qui est électriquement connecté audit capteur d'humidité (6) pour recevoir ledit signal d'impulsion électrique (PWM) et est configuré pour faire varier la tension de mesure (VS) sur ladite première borne (3a) dudit appareil de mesure (3) sur la base du rapport cyclique (DC) dudit signal d'impulsion électrique (PWM), ledit premier étage électronique (8) comprend :

   une résistance (8R9), et un dispositif de commutation électronique (8Q4) qui est connecté à ladite résistance (8R9), dans lequel ledit capteur d'humidité (6) commande le dispositif de commutation électronique (8Q4) au moyen du signal d'impulsion électrique (PWM) pour faire varier la résistance équivalente (RS) entre ladite première borne (3a) et une seconde borne (3b) sur la base de l'humidité détectée/mesurée ; dans lequel ledit module de traitement (5) est configuré pour détecter une variation de tension de mesure (VS) sur la base de la variation de ladite résistance équivalente (RS).

2. Dispositif de mesure d'humidité (2) (42) selon la revendication 1, comprenant un second étage électronique (9) muni d'un étage d'alimentation (91), qui est connecté à ladite première borne (3a) pour recevoir un premier courant (IS) associé à ladite première tension (VS) et qui à son tour est muni :

   d'un nœud de référence (19) réglé à une tension de référence (VREF), d'un dispositif amplificateur (18), qui est connecté entre ladite première borne (3a) et ledit nœud de référence (19) et est configuré pour commander ledit premier courant (IS) sur la base d'un signal de commande, d'un premier circuit résistif (14) muni de deux résistances (9R7) et (9R8) connectées en série entre ladite première borne (3a) et une seconde borne (3b) ; d'un second circuit résistif (15) muni d'une résistance (9R5) connectée entre ladite seconde borne (3b) et un nœud réglé à un potentiel de masse ; d'un circuit opérationnel (13), qui est connecté audit premier circuit résistif (14) et au second circuit résistif (15) et est configuré pour fournir le signal de commande au dispositif amplificateur (18), ce qui régule ledit premier courant (IS) sur la base de la chute de tension sur une résistance (9R8) dudit premier circuit résistif (14) et de la chute de tension sur la résistance (9R5) du second circuit résistif (15).

3. Dispositif de mesure d'humidité (2) (42) selon la revendication 2, dans lequel ledit circuit opérationnel (13) comprend un amplificateur opérationnel (21) ayant une entrée inverseuse connectée à un nœud intermédiaire (17) du premier circuit résistif (14) et à la sortie de l'amplificateur opérationnel (21) par le biais d'un condensateur (9C6).

4. Dispositif de mesure d'humidité (2) (42) selon la revendication 3, dans lequel ledit amplificateur opérationnel (21) comprend une entrée non inverseuse, qui est connectée à la fois au nœud intermédiaire (17) par le biais d'un condensateur (9C7) et à une borne de référence réglée à un potentiel de référence.

5. Dispositif de mesure d'humidité (2) (42) selon la revendication 4, dans lequel ledit étage d'alimentation (9I) est configuré pour atteindre un état d'équilibre dans lequel les entrées inverseuse et non inverseuse de l'amplificateur opérationnel (21) sont au même potentiel.

6. Dispositif de mesure d'humidité (2) (42) selon la revendication 5, dans lequel une sortie de l'amplificateur opérationnel (21) est connectée à une borne de commande dudit dispositif amplificateur (18) par le biais d'une résistance (9R4).

7. Dispositif de mesure d'humidité (2) (42) selon l'une quelconque des revendications 2 à 6, dans lequel le second étage électronique (9) comprend un étage de surveillance électronique (9II), qui est connecté audit nœud de référence (19) et audit capteur d'humidité (6) pour lui fournir une tension d'alimentation stabilisée (Vcc) basée sur ladite tension de référence (VREF) ; ledit étage de surveillance électronique (9II) étant configuré pour interrompre l'alimentation d'une tension d'alimentation stabilisée (Vcc) au capteur d'humidité (6) sur la base dudit signal d'impulsion électrique (PWM).

8. Dispositif de mesure d'humidité (2) (42) selon la revendication 7 dans lequel ledit étage de surveillance électronique (9II) surveille l'activité du capteur d'humidité (6) sur la base de la présence/de l'absence dudit signal d'impulsion électrique (PWM).

9. Dispositif de mesure d'humidité (2) (42) selon la revendication 8, dans lequel ledit étage de surveillance électronique (9II) comprend une borne d'alimentation (9e) connectée à une borne (6b) du capteur d'humidité (6) pour alimenter avec la tension d'alimentation stabilisée (Vcc), et une borne de détection (9f) connectée à une borne (6e) du capteur d'humidité (6) pour recevoir ledit signal d'impulsion électrique (PWM).

10. Dispositif de mesure d'humidité (2) (42) selon la revendication 9, dans lequel ledit étage de surveillance électronique (9II) comprend un dispositif amplificateur (31), qui possède les bornes de source et de drain respectivement connectées à une première borne (9d) et une seconde borne (9e) et la borne de grille connectée à une borne de masse par le biais d'une résistance (9R1).

11. Dispositif de mesure d'humidité (2) (42) selon l'une quelconque des revendications précédentes, dans lequel lorsque l'humidité varie au sein de la plage prédéfinie, ledit capteur d'humidité (6) fait varier le rapport cyclique dudit signal d'impulsion électrique (PWM) et la valeur de la résistance équivalente totale (RS) entre la première borne (3a) et la seconde borne (3b) du dispositif de mesure électronique 3 selon le signal d'impulsion électrique sur la base de la relation suivante :

$$RS = (R9/DC) * RF / ((R9/DC) + RF)$$

dans laquelle
DC est le rapport cyclique du signal d'impulsion électrique (PWM).

12. Système de mesure d'humidité (1) (40) comprenant :

un appareil de mesure électronique (3) qui est muni : d'au moins une première borne (3a) et d'un module de traitement (5), qui est configuré pour déterminer l'humidité sur la base de la tension de mesure (VS) sur ladite borne (3a), et
un dispositif de mesure d'humidité (2) (42) réalisé selon l'une quelconque des revendications précédentes :
ledit module de traitement (5) est configuré pour détecter une variation de la tension de mesure (VS) sur la base de la variation de ladite résistance équivalente (RS) .

FIG. 1

FIG. 2

EP 3 502 678 B1

# FIG. 3

FIG. 4

EP 3 502 678 B1

# FIG. 5

FIG. 6

EP 3 502 678 B1

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102017000148071